# EUROPEAN PATENT SPECIFICATION

(11) **EP 4 449 947 B1**
(45) Date of publication and mention of the grant of the patent: **18.03.2026**
(21) Application number: 23170308.3
(22) Date of filing: 27.04.2023
(51) Int. Cl.: A47B 3/00, A47B 23/00, A47C 20/02, A47C 21/00

(54) **MULTIFUNCTIONAL BED**
MULTIFUNKTIONSBETT
LIT MULTIFONCTION

(30) Priority: 17.04.2023 CN 202310433383
(43) Date of publication of application: 23.10.2024
(73) Proprietor: Shenzhen Meiya Industrial Development Co., Ltd, Shenzhen Guangdong (CN)
(72) Inventor: Luo, Honglang, Shenzhen (CN)
(74) Representative: Cleanthous, Marinos

(56) References cited:
- CN-A- 102 657 433
- CN-A- 113 397 337
- CN-U- 2 121 934
- CN-U- 201 577 871
- CN-U- 215 607 452

## Description

### TECHNICAL FIELD

The present disclosure relates to the technical field of beds, in particular to, a multifunctional bed.

### BACKGROUND

Bedding is an important piece of furniture in life, and has diversified functions. Chinese invention patent No. CN113397337A discloses a multifunctional bed, including a bed body and a mattress. A backrest is fixed to one side of an upper portion of the bed body; low-frequency massage mechanisms are arranged on two sides of a surface of the backrest; pressure sensors are mounted in a recess below the mattress at equal intervals; a self-adaptive mechanism is arranged on a surface of the mattress; a constant temperature mechanism is arranged on a surface of the mattress on one side of the self-adaptive mechanism; and a lifting mechanism is arranged on one side below the mattress. This invention realizes a function of facilitating rise and fall of one end of the mattress during use of the bed, a function of massaging the back of a user, a function of making an airbag abutting against the body parts of a user, and a function of adjusting a temperature of a graphene heating pad during the use of the bed.

However, the above patent still has the following problems during use:
1. The above patent can only massage the back of a user. It is inconvenient for the above patent to massage the neck of the user for relaxing while massaging the back of the user, so that the use experience is poor.
2. In the above patent, there is no table board convenient for a user, which makes it inconvenient for the user to sit in the bed for work or it is inconvenient to place items. This patent is not convenient to use.

For the above problems, the present disclosure provides a multifunctional bed.

### SUMMARY

The present disclosure provides a multifunctional bed, which solves the shortcomings in the prior art that it is inconvenient to massage the neck of a user and there is no table board convenient to use.

The present disclosure provides the following technical solution:
A multifunctional bed according to the invention is defined in claim 1 and includes:
a bed body, wherein a recess is formed in a top of the bed body, and a mattress is arranged inside the recess;
a backrest, which is fixedly mounted on one side of the top of the bed body, wherein a user leans against the backrest; a hard mounting frame is fixedly mounted on one side of the backrest; a cushion is fixedly mounted between inner walls of two sides of the hard mounting frame;
a table board, which is used for providing a place for the user to place items, wherein a bottom of the table board is connected with two turntables through supporting rods; one side of each of the two turntables is rotatably connected with a sliding block; first fixed rods are fixedly mounted on two sides of the bed body; the two sliding blocks are slidably connected with the first fixed rods on the two sides separately;
a massage assembly, which is used for massaging the back and neck of the user; and
a locking assembly, which is used for locking the table board.

In one possible design, the massage assembly includes a plurality of massage rollers rotatably connected between the inner walls of the two sides of the hard mounting frame; one end of each of the plurality of massage rollers fixedly penetrates through a first gear; the plurality of first gears are meshed with each other; the other end of one of the massage rollers fixedly penetrates through a first synchronizing wheel; a plurality of sliding rods penetrate through one side of the backrest; a massage cushion is fixedly mounted on one-sides of the plurality of sliding rods; a connecting rod is fixedly mounted at a bottom of one of the sliding rods; a fixed plate is fixedly mounted between the inner walls of the two sides of the backrest; a motor is fixedly mounted at a top of the fixed plate; an output shaft of the motor is fixedly connected with a double-slot synchronizing wheel through a rotating shaft; the double-slot synchronizing wheel is in drive connection with the first synchronizing wheel through a synchronous belt; the double-slot synchronizing wheel is in drive connection with a second synchronizing wheel through another synchronous belt; the second synchronizing wheel is rotatably connected with the inner wall of one side of the backrest through a rotating shaft; the other end of the rotating shaft is fixedly connected with a first turntable; a fixed column is fixedly mounted at a position, deviating from a circle center, on one side of the first turntable; and the fixed column is slidably connected with the connecting rod through a sliding chute.

In one possible design, the locking assembly includes a second gear fixedly connected to the turntable on one side; the second gear is in clamping connection with a gear slot seat; a second fixed rod penetrates through the gear slot seat, the second gear, and the turntable; one end of the second fixed rod is fixedly connected with the sliding blocks; the other end of the second fixed rod is fixedly connected with a limiting shell; an outer wall of the second fixed rod is sleeved with a pressure spring; one end of the pressure spring is fixedly connected with one side of the gear slot seat; the other end of the pressure spring is fixedly connected with an inner wall of one side of the limiting shell; two deflector rods are fixedly mounted on a circumferential outer wall of the gear slot seat; two limiting sliding holes are formed in a circumferential outer wall of the limiting shell; and the two deflector rods are respectively slidably connected with the two limiting sliding holes.

Further, an electric telescopic rod is fixedly embedded at the top of the bed body; an output shaft of the electric telescopic rod is fixedly provided with a push plate; the push plate resists against a bottom of the mattress; a limiting block is fixedly mounted at the bottom of the mattress; and the push plate cooperates with the limiting block.

Further, a heating module is fixedly embedded in a top of the mattress; and a graphene heat-conducting plate is fixedly mounted at a top of the heating module.

Further, a circuit board is fixedly mounted at the bottom of the bed body; and the circuit board is electrically connected with the electric telescopic rod, the motor, and the heating module.

Further, a groove for accommodating the push plate and the limiting block is formed in a bottom inner wall of the recess.

Further, the first synchronizing wheel and the plurality of first gears are separately located in hard compartments on the two sides of the hard mounting frame.

In the present disclosure, when a user needs massage, the user can push the deflector rods to separate the gear slot seat from the second gear, so that the turntable can be rotated at this time to lift up the table board. After the user stops pushing the deflector rods, the gear slot seat is clamped with the second gear to fix the table board. Since the sliding blocks slide on the first fixed rods, the table board can then be moved from a bed end to a desired position, which facilitates angle and position adjustment and use.

In the present disclosure, the back and neck of the user can be massaged at the same time; the massage effect is good; the fatigue of the user can be relieved; the mobile table board that is convenient for angle adjustment is also arranged; meanwhile, when not in use, the table board can be stored in the bed end, which will not occupy a relatively large space and is convenient to use; and in addition, when the user lies down, the head of the user can be raised, and the feet can be heated. Therefore, the use experience is better.

CN113397337 discloses a multifunctional bed which comprises a bed body and a mattress. A backrest is fixed to one side of the upper portion of the bed body, low-frequency massage mechanisms are arranged on the two sides of the surface of the backrest, pressure sensors are installed in a containing groove below the mattress at equal intervals, a self-adaptive mechanism is arranged on the surface of the mattress, a constant temperature mechanism is arranged on the surface of the mattress on one side of the self-adaptive mechanism, and a lifting mechanism is arranged on one side below the mattress. According to the invention, the function of conveniently lifting one end of the mattress when the bed is used is realized, the function of massaging the back of the user when the bed is used is realized, the function of fitting an air bag with the body part of the user when the bed is used is realized, and the function of adjusting the temperature of a graphene heating pad when the bed is used is also realized.

### BRIEF DESCRIPTION OF THE DRAWINGS

FIG. 1 is a schematic diagram of a three-dimensional structure of a multifunctional bed provided according to an embodiment of the present disclosure;
FIG. 2 is a schematic diagram of a side sectional structure of a multifunctional bed provided according to an embodiment of the present disclosure;
FIG. 3 is a schematic diagram of an internal structure of a backrest of a multifunctional bed provided according to an embodiment of the present disclosure;
FIG. 4 is a schematic structural diagram of an actuation portion of a massage assembly of a multifunctional bed provided according to an embodiment of the present disclosure;
FIG. 5 is a schematic structural diagram of a table board of a multifunctional bed provided according to an embodiment of the present disclosure;
FIG. 6 is a schematic structural diagram of a locking assembly of a multifunctional bed provided according to an embodiment of the present disclosure; and
FIG. 7 is a schematic structural diagram of a moving state of a table board of a multifunctional bed provided according to an embodiment of the present disclosure.

### DETAILED DESCRIPTION OF THE EMBODIMENTS

The embodiments of the present disclosure are described below in combination with the accompanying drawings.

### Embodiment 1

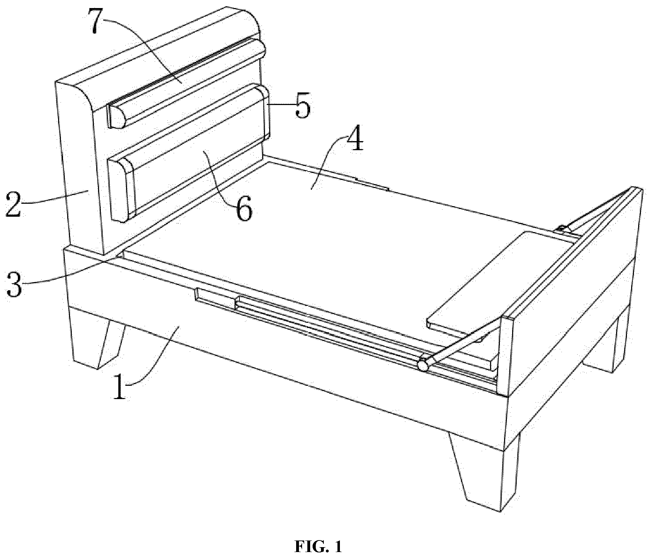

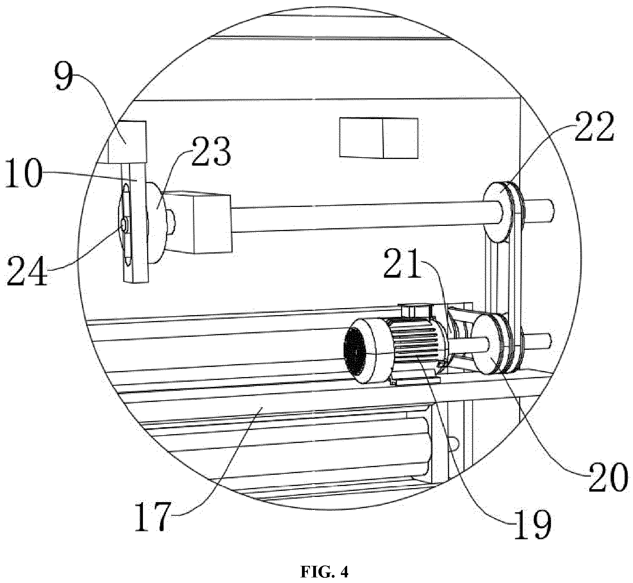

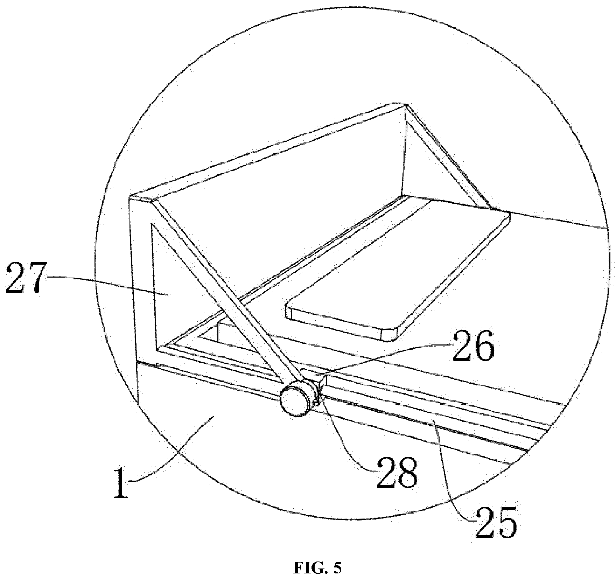

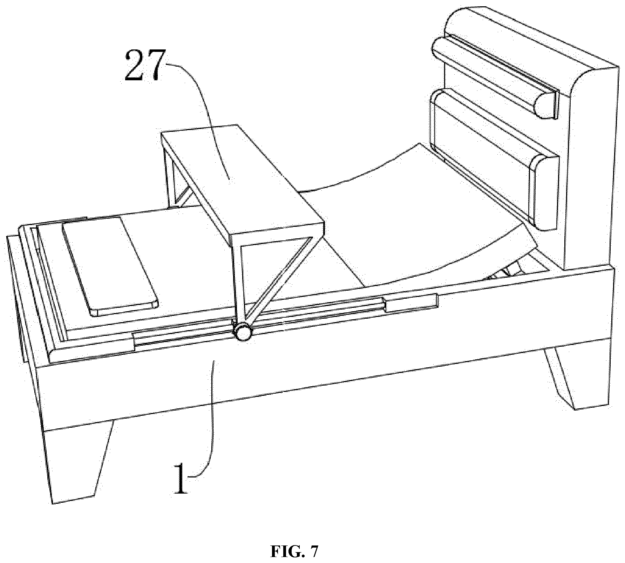

Referring to FIG. 1 to FIG. 7, a multifunctional bed includes:
a bed body 1, wherein a recess 3 is formed in a top of the bed body 1, and a mattress 4 is arranged inside the recess 3;
a backrest 2, which is fixedly mounted on one side of the top of the bed body 1, wherein a user leans against the backrest 2; a hard mounting frame 5 is fixedly mounted on one side of the backrest 2; a cushion 6 is fixedly mounted between inner walls of two sides of the mounting frame 5;
a table board 27, which is used for providing a place for the user to place items, wherein a bottom of the table board 27 is connected with two turntables 28 through supporting rods; one side of each of the two turntables 28 is rotatably connected with a sliding block 26; first fixed rods 25 are fixedly mounted on two sides of the bed body 1; the two sliding blocks 26 are slidably connected with the first fixed rods 25 on the two sides separately;
a massage assembly, which is used for massaging the back and neck of the user; and
a locking assembly, which is used for locking the table board 27.

In the above technical solution, a multifunctional bed that is convenient to use can be achieved. The multifunctional bed can massage the back and neck of a user. In addition, the mobile table board that is convenient to store is also convenient for angle adjustment, so that the use experience is relatively good.

Referring to FIG. 1, FIG. 2, FIG. 3, and FIG. 4, in this embodiment, the massage assembly includes a plurality of massage rollers 8 rotatably connected between the inner walls of the two sides of the hard mounting frame 5. One end of each of the plurality of massage rollers 8 fixedly penetrates through a first gear 18. The plurality of first gears 18 are meshed with each other. The other end of one of the massage rollers 8 fixedly penetrates through a first synchronizing wheel 21. A plurality of sliding rods 9 penetrate through one side of the backrest 2. The massage cushion 7 is fixedly mounted on one-sides of the plurality of sliding rods 9. A connecting rod 10 is fixedly mounted at a bottom of one of the sliding rods 9. A fixed plate 17 is fixedly mounted between the inner walls of the two sides of the backrest 2. A motor 19 is fixedly mounted at a top of the fixed plate 17. An output shaft of the motor 19 is fixedly connected with a double-slot synchronizing wheel 20 through a rotating shaft. The double-slot synchronizing wheel 20 is in drive connection with the first synchronizing wheel 21 through a synchronous belt. The double-slot synchronizing wheel 20 is in drive connection with a second synchronizing wheel 22 through another synchronous belt. The second synchronizing wheel 22 is rotatably connected with the inner wall of one side of the backrest 2 through a rotating shaft. The other end of the rotating shaft is fixedly connected with a first turntable 23. A fixed column 24 is fixedly mounted at a position, deviating from a circle center, on one side of the first turntable 23. The fixed column 24 is slidably connected with the connecting rod 10 through a sliding chute.

In the above technical solution, the back and neck of the user can be massaged at the same time, so that the massage effect is good, and the user experience is better.

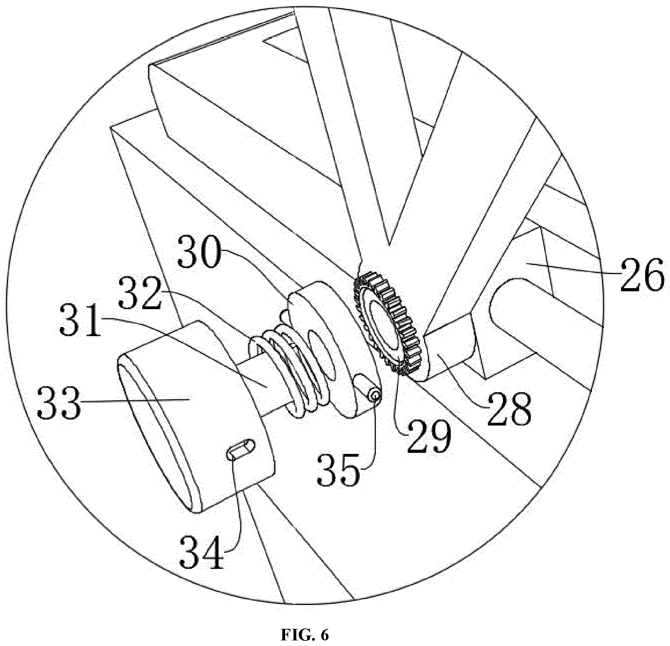

Referring to FIG. 6, in this embodiment, the locking assembly includes a second gear 29 fixedly connected to the turntable 28 on one side. The second gear 29 is in clamping connection with a gear slot seat 30. A second fixed rod 31 penetrates through the gear slot seat 30, the second gear 29, and the turntable 28. One end of the second fixed rod 31 is fixedly connected with the sliding blocks 26. The other end of the second fixed rod 31 is fixedly connected with a limiting shell 33. An outer wall of the second fixed rod 31 is sleeved with a pressure spring 32. One end of the pressure spring 32 is fixedly connected with one side of the gear slot seat 30. The other end of the pressure spring 32 is fixedly connected with an inner wall of one side of the limiting shell 33. Two deflector rods 35 are fixedly mounted on a circumferential outer wall of the gear slot seat 30. Two limiting sliding holes 34 are formed in a circumferential outer wall of the limiting shell 33. The two deflector rods 35 are respectively slidably connected with the two limiting sliding holes 34.

In the above technical solution, angle adjustment and fixing can be performed on the table board 27, which facilitates use by the user.

### Embodiment 2

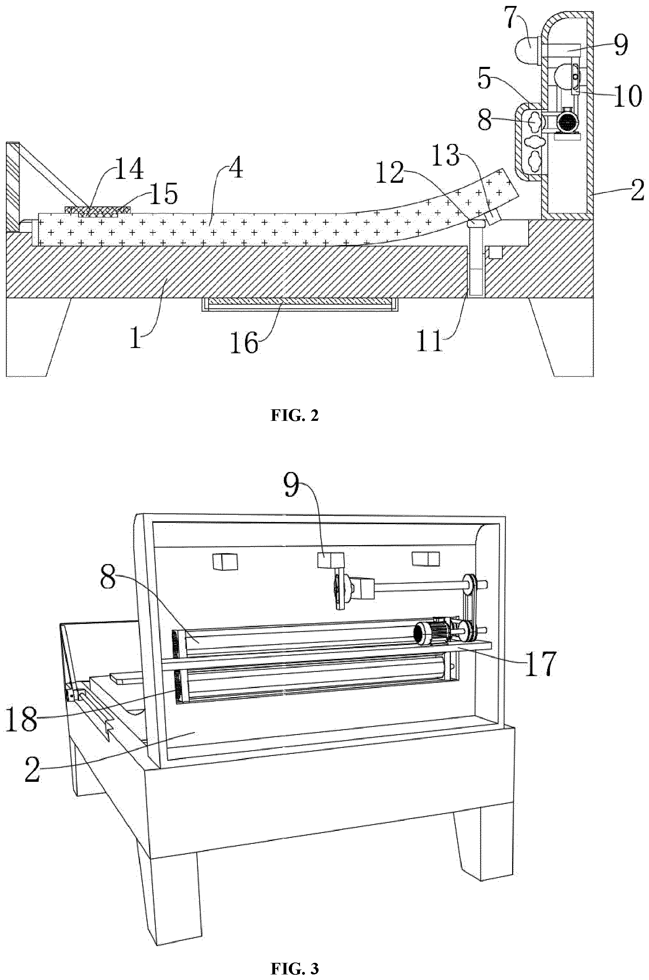

Referring to FIG. 2, this embodiment has a difference that an electric telescopic rod 11 is fixedly embedded at the top of the bed body 1. An output shaft of the electric telescopic rod 11 is fixedly provided with a push plate 12. The push plate 12 resists against a bottom of the mattress 4. A limiting block 13 is fixedly mounted at the bottom of the mattress 4. The push plate 12 cooperates with the limiting block 13.

In the above technical solution, one end of the mattress 4 can be raised, which is convenient for raising the head of the user, so that the sleep experience is better.

In this embodiment, a heating module 14 is fixedly embedded in a top of the mattress 4. A graphene heat-conducting plate 15 is fixedly mounted at a top of the heating module 14.

In the above technical solution, the feet of the user can be heated during use of the bed, so that the use experience is better.

In this embodiment, a circuit board 16 is fixedly mounted at the bottom of the bed body 1. The circuit board 16 is electrically connected with the electric telescopic rod 11, the motor 19, and the heating module 14. The circuit board 16 and the heating module 14 are both the same as those in the Chinese invention patent No. CN113397337A.

In the above technical solution, the electric telescopic rod 11, the motor 19, and the heating module 14 can be uniformly controlled, which are convenient to use.

In this embodiment, a groove for accommodating the push plate 12 and the limiting block 13 is formed in a bottom inner wall of the recess 3.

In the above technical solution, it is convenient for horizontally placing the mattress 4.

Referring to FIG. 1 and FIG. 3, in this embodiment, the first synchronizing wheel 21 and the plurality of first gears 18 are separately located in hard compartments on the two sides of the hard mounting frame 5.

In the above technical solution, injury to the user caused by rotation of the gears and the synchronizing wheels can be avoided.

However, as is well known to those skilled in the art, the working principles and wiring methods of the electric telescopic rod, the motor, and the heating module are common and all belong to conventional methods or common knowledge, and will not be repeated here. Those skilled in the art can make any selection according to their needs or convenience.

A working principle and use process of the technical solution is as follows. During use, when a user sits in the bed, the user can lean against the cushion 6 with the back and abut against the massage cushion 7 with the neck. At this time, the motor 19 is turned on. The massage rollers 8 can be driven by the synchronizing wheels to rotate. The plurality of first gears 18 are meshed with each other, so that all the massage rollers 8 can rotate. Massage convex bars arranged on outer walls of the massage rollers 8 can continuously massage the back of the user. At the same time, the double-slot synchronizing wheel 20 can also drive the second synchronizing wheel 22 to rotate, thereby driving the first turntable 23 to start to rotate. The fixed column 24 slides in the sliding chute in the connecting rod 10, so that the sliding rods 9 can continuously do a reciprocating motion in a direction perpendicular to the backrest 2, to make the massage cushion 7 extend and contract, which can continuously push and massage the neck of the user to relieve the fatigue of the user. When the user needs massage, the user can push the deflector rods 35 to separate the gear slot seat 30 from the second gear 29, so that the turntable 28 can be rotated at this time to lift up the table board 27. After the user stops pushing the deflector rods 35, the gear slot seat 30 is clamped with the second gear 29 to fix the table board 27. Since the sliding blocks 26 slide on the first fixed rods 25, the table board 27 can then be moved from a bed end to a desired position, to facilitate angle and position adjustment and use. The heating module 14 can heat the graphene heat-conducting plate 15, and the graphene heat-conducting plate 15 can quickly conduct the heat, to make the user have a more comfortable sleep experience. The electric telescopic rod 11 is turned on to push out the push plate 12. The push plate 12 may squeeze the bottom of the mattress 4 to raise one end of the mattress 4. The push plate 12 can also be avoided from sliding out under the limitation of the limiting block 13, so that it is convenient to raise the head of the user, to improve the use experience.

It should be understood that those of ordinary skill in the art can make improvements or transformations according to the above illustrations, and all these improvements and transformations shall fall within the protection scope of the claims appended.

## Claims

1. A multifunctional bed, comprising:
a bed body (1), wherein a recess (3) is formed in a top of the bed body (1), and a mattress (4) is arranged inside the recess (3);
a backrest (2), which is fixedly mounted on one side of the top of the bed body (1), wherein a user leans against the backrest (2); a hard mounting frame (5) is fixedly mounted on one side of the backrest (2); a cushion (6) is fixedly mounted between inner walls of two sides of the hard mounting frame (5);
a table board (27), which is used for providing a place for the user to place items, wherein a bottom of the table board (27) is connected with two turntables (28) through supporting rods; one side of each of the two turntables (28) is rotatably connected with a sliding block (26); first fixed rods (25) are fixedly mounted on two sides of the bed body (1); the two sliding blocks (26) are slidably connected with the first fixed rods (25) on the two sides separately;
a massage assembly, which is used for massaging the back and neck of the user; and
a locking assembly, which is used for locking the table board (27), the multifunctional bed is characterized that, the massage assembly comprises a plurality of massage rollers (8) rotatably connected between the inner walls of the two sides of the hard mounting frame (5); one end of each of the plurality of massage rollers (8) fixedly penetrates through a first gear (18); the plurality of first gears (18) are meshed with each other; the other end of one of the massage rollers (8) fixedly penetrates through a first synchronizing wheel (21); a plurality of sliding rods (9) penetrate through one side of the backrest (2); the massagecushion (7) is fixedly mounted on one-sides of the plurality of sliding rods (9); a connecting rod (10) is fixedly mounted at a bottom of one of the sliding rods (9); a fixed plate (17) is fixedly mounted between the inner walls of the two sides of the backrest (2); a motor (19) is fixedly mounted at a top of the fixed plate (17); an output shaft of the motor is fixedly connected with a double-slot synchronizing wheel (20) through a rotating shaft; the double-slot synchronizing wheel (20) is in drive connection with the first synchronizing wheel (21) through a synchronous belt; the double-slot synchronizing wheel (20) is in drive connection with a second synchronizing wheel (22) through another synchronous belt; the second synchronizing wheel (22) is rotatably connected with the inner wall of one side of the backrest (2) through a rotating shaft; the other end of the rotating shaft is fixedly connected with a first turntable (23); a fixed column (24) is fixedly mounted at a position, deviating from a circle center, on one side of the first turntable (23); and the fixed column (24) is slidably connected with the connecting rod (10) through a sliding chute.

2. The multifunctional bed according to claim 1, wherein the locking assembly comprises a second gear (29) fixedly connected to the turntable (28) on one side; the second gear (29) is in clamping connection with a gear slot seat (30); a second fixed rod (31) penetrates through the gear slot seat (30), the second gear (29), and the turntable (28); one end of the second fixed rod (31) is fixedly connected with the sliding blocks (26); the other end of the second fixed rod (31) is fixedly connected with a limiting shell (33); an outer wall of the second fixed rod (31) is sleeved with a pressure spring (32); one end of the pressure spring (32) is fixedly connected with one side of the gear slot seat (30); the other end of the pressure spring (32) is fixedly connected with an inner wall of one side of the limiting shell (33); two deflector rods (35) are fixedly mounted on a circumferential outer wall of the gear slot seat (30); two limiting sliding holes (34) are formed in a circumferential outer wall of the limiting shell (33); and the two deflector rods (35) are respectively slidably connected with the two limiting sliding holes (34).

3. The multifunctional bed according to claim 1, wherein an electric telescopic rod (11) is fixedly embedded at the top of the bed body (1); an output shaft of the electric telescopic rod (11) is fixedly provided with a push plate (12); the push plate (12) resists against a bottom of the mattress (4); a limiting block (13) is fixedly mounted at the bottom of the mattress (4); and the push plate (12) cooperates with the limiting block (13).

4. The multifunctional bed according to claim 1, wherein a heating module (14) is fixedly embedded in a top of the mattress (4); and a graphene heat-conducting plate (15) is fixedly mounted at a top of the heating module (14).

5. The multifunctional bed according to claim 1, wherein a circuit board (16) is fixedly mounted at the bottom of the bed body (1); and the circuit board (16) is electrically connected with the electric telescopic rod (11), the motor (19), and the heating module (14).

6. The multifunctional bed according to claim 1, wherein a groove for accommodating the push plate (12) and the limiting block (13) is formed in a bottom inner wall of the recess (3).

7. The multifunctional bed according to claim 1, wherein the first synchronizing wheel (21) and the plurality of first gears (18) are separately located in hard compartments on the two sides of the hard mounting frame (5).

## Patentansprüche

1. Multifunktionsbett, umfassend:
einen Bettkörper (1), wobei an einer Oberseite des Bettkörpers (1) eine Aussparung (3) ausgebildet ist und innerhalb der Ausnehmung (3) eine Matratze (4) angeordnet ist;
eine Rückenlehne (2), die fest auf einer Seite der Oberseite des Bettkörpers (1) montiert ist, wobei sich ein Benutzer an die Rückenlehne (2) anlehnt;
einen harten Montagerahmen (5), der auf einer Seite der Rückenlehne (2) fest angebracht ist;
eine Polsterung (6), die fest zwischen Innenwänden zweier Seiten des harten Montagerahmens (5) montiert ist;
eine Tischplatte (27), die eine Ablagefläche für den Benutzer zum Ablegen von Gegenständen bereitstellt, wobei eine Unterseite der Tischplatte (27) über Stützstangen mit zwei Drehscheiben (28) verbunden ist; wobei jeweils eine Seite jeder der beiden Drehscheiben (28) drehbar mit einem Gleitblock (26) verbunden ist; wobei erste feste Stangen (25) fest an beiden Seiten des Bettkörpers (1) montiert sind; wobei die beiden Gleitblöcke (26) jeweils gleitend mit den ersten festen Stangen (25) an den beiden Seiten verbunden sind; und
eine Massagebaugruppe, die zum Massieren des Rückens und Nackens des Benutzers verwendet wird; und eine Verriegelungsbaugruppe, die zum Verriegeln der Tischplatte (27) verwendet wird,
**dadurch gekennzeichnet, dass** die Massagebaugruppe eine Vielzahl von Massagerollen (8) umfasst, die drehbar zwischen den Innenwänden der beiden Seiten des harten Montagerahmens (5) verbunden sind; wobei ein Ende jeder der Vielzahl von Massagerollen (8) fest durch ein erstes Zahnrad (18) hindurchgreift; wobei die Vielzahl von ersten Zahnräder (18) miteinander im Eingriff stehen; wobei das andere Ende einer der Massagerollen (8) fest durch ein erstes Synchronrad (21) hindurchgeführt ist; wobei eine Vielzahl von Gleitstangen (9) durch eine Seite der Rückenlehne (2) hindurchgreift; wobei die Massagepolsterung (7) fest an einer Seite der Vielzahl von Gleitstangen (9) angebracht ist; wobei eine Verbindungsstange (10) fest an einer Unterseite einer der Gleitstangen (9) montiert ist; wobei eine feste Platte (17) fest zwischen den Innenwänden der beiden Seiten der Rückenlehne (2) angebracht ist; wobei ein Motor (19) fest an einer Oberseite der festen Platte (17) montiert ist; wobei eine Ausgangswelle des Motors über eine Drehwelle fest mit einem Doppelnut-Synchronrad (20) verbunden ist; wobei das Doppelnut-Synchronrad (20) über einen Synchronriemen mit dem ersten Synchronrad (21) in Antriebsverbindung steht; wobei das Doppelnut-Synchronrad (20) über einen weiteren Synchronriemen in Antriebsverbindung mit einem zweiten Synchronrad (22) steht; wobei das zweite Synchronrad (22) über eine Drehwelle drehbar mit der Innenwand einer Seite der Rückenlehne (2) verbunden ist; wobei das andere Ende der Drehwelle fest mit einer ersten Drehscheibe (23) verbunden ist; wobei eine feste Säule (24) an einer vom Kreismittelpunkt abweichenden Position an einer Seite der ersten Drehscheibe (23) fest montiert ist; und wobei die feste Säule (24) über eine Gleitnut gleitend mit der Verbindungsstange (10) verbunden ist.

2. Multifunktionsbett nach Anspruch 1, **dadurch gekennzeichnet, dass** die Verriegelungsbaugruppe ein zweites Zahnrad (29) umfasst, das fest mit der Drehscheibe (28) an einer Seite verbunden ist; wobei das zweite Zahnrad (29) in Klemmverbindung mit einem Zahnradschlitzsitz (30) steht;
wobei eine zweite feste Stange (31) durch den Zahnradschlitzsitz (30), das zweite Zahnrad (29) und die Drehscheibe (28) hindurchgreift; wobei ein Ende der zweiten festen Stange (31) fest mit dem Gleitblock (26) verbunden ist und das andere Ende fest mit einer Begrenzungshülse (33) verbunden ist; wobei eine Druckfeder (32) über die Außenwand der zweiten festen Stange (31) aufgeschoben ist; wobei ein Ende der Druckfeder (32) fest mit einer Seite des Zahnradschlitzsitzes (30) verbunden ist und das andere Ende fest mit der Innenwand einer Seite der Begrenzungshülse (33) verbunden ist;
wobei zwei Umlenkstangen (35) fest an einer äußeren Umfangswand des Zahnradsitzes (30) montiert sind; wobei zwei Begrenzungsgleitlöcher (34) in einer äußeren Umfangswand der Begrenzungshülse (33) ausgebildet sind; und wobei die beiden Umlenkstangen (35) jeweils gleitend mit den beiden Begrenzungsgleitlöchern (34) verbunden sind.

3. Multifunktionsbett nach Anspruch 1, **dadurch gekennzeichnet, dass** eine elektrische Teleskopstange (11) fest in einer Oberseite des Bettkörpers (1) eingebettet ist; wobei eine Ausgangswelle der elektrischen Teleskopstange (11) fest mit einer Schubplatte (12) versehen ist; wobei die Schubplatte (12) gegen eine Unterseite der Matratze (4) anliegt; wobei ein Begrenzungsblock (13) fest an einer Unterseite der Matratze (4) montiert ist; und wobei die Schubplatte (12) mit dem Begrenzungsblock (13) zusammenwirkt.

4. Multifunktionsbett nach Anspruch 1, wobei ein Heizmodul (14) fest in eine Oberseite der Matratze (4) eingebettet ist; und eine Graphen-Wärmeleitplatte (15) fest an einer Oberseite des Heizmoduls (14) montiert ist.

5. Multifunktionsbett nach Anspruch 1, wobei eine Leiterplatte (16) an der Unterseite des Bettkörpers (1) fest montiert ist; und die Leiterplatte (16) mit der elektrischen Teleskopstange (11), dem Motor (19) und dem Heizmodul (14) elektrisch verbunden ist.

6. Multifunktionsbett nach Anspruch 1, wobei eine Rille zur Aufnahme der Schubplatte (12) und des Begrenzungsblocks (13) in einer unteren Innenwand der Aussparung (3) ausgebildet ist.

7. Multifunktionsbett nach Anspruch 1, wobei das erste Synchronrad (21) und die Vielzahl von ersten Zahnrädern (18) sich getrennt in Hartfächern auf den beiden Seiten des harten Montagerahmens (5) befinden.

## Revendications

1. Lit multifonction, comprenant :
un corps de lit (1), une cavité (3) étant formée dans une partie supérieure du corps de lit (1), et un matelas (4) étant disposé à l'intérieur de la cavité (3) ;
un dossier (2), qui est monté de manière fixe sur un côté de la partie supérieure du corps de lit (1), permettant à un utilisateur de s'appuyer contre au dossier (2) ; un cadre de montage rigide (5) étant monté de manière fixe sur un côté du dossier (2) ;
un coussin (6) étant monté de manière fixe entre des parois internes de deux côtés du cadre de montage rigide (5) ;
une tablette (27), destinée à fournir un endroit permettant à l'utilisateur de poser des objets, une partie inférieure de la tablette (27) étant reliée à deux plateaux tournants (28) par l'intermédiaire des tiges de support ; un côté de chacun des deux plateaux tournants (28) étant relié de manière rotative à un bloc coulissant (26) ; des premières tiges fixes (25) étant montées de manière fixe sur deux côtés du corps de lit (1) ; les deux blocs coulissants (26) étant reliés de manière coulissante aux premières tiges fixes (25) sur les deux côtés respectivement ;
un ensemble de massage, destiné à masser le dos et le cou de l'utilisateur ; et
un ensemble de verrouillage, destiné à verrouiller la tablette (27), le lit multifonction se **caractérise en ce que**, l'ensemble de massage comprend une pluralité de rouleaux de massage (8) reliés de manière rotative entre les parois internes des deux côtés du cadre de montage rigide (5) ; une extrémité de chacun de la pluralité de rouleaux de massage (8) pénètre de manière fixe à travers un premier pignon (18) ; la pluralité de premiers pignons (18) sont engrenés l'un avec l'autre ; l'autre extrémité de l'un des rouleaux de massage (8) pénètre de manière fixe à travers une première roue de synchronisation (21) ; une pluralité de tiges coulissantes (9) pénètrent à travers un côté du dossier (2) ; le coussin de massage (7) est monté de manière fixe sur uns côtés de la pluralité de tiges coulissantes (9) ; une bielle (10) est montée de manière fixe à une partie inférieure de l'une des tiges coulissantes (9) ; une plaque fixe (17) est monté de manière fixe entre les parois internes des deux côtés du dossier (2) ; un moteur (19) est monté de manière fixe à une partie supérieure de la plaque fixe (17) ;
un arbre de sortie du moteur est relié de manière fixe à une roue de synchronisation à double fente (20) par l'intermédiaire d'un arbre rotatif ; la roue de synchronisation à double fente (20) est en liaison d'entraînement avec la première roue de synchronisation (21) par l'intermédiaire d'une courroie synchrone ; la roue de synchronisation à double fente (20) est en liaison d'entraînement avec une seconde roue de synchronisation (22) par l'intermédiaire d'une autre courroie synchrone ; la seconde roue de synchronisation (22) est reliée de manière rotative à la paroi interne d'un côté du dossier (2) par l'intermédiaire d'un arbre rotatif ; l'autre extrémité de l'arbre rotatif est reliée de manière fixe à un premier plateau tournant (23) ; une colonne fixe (24) est montée de manière fixe à une position, déviant d'un centre circulaire, sur un côté du premier plateau tournant (23) ; et la colonne fixe (24) est reliée de façon coulissante à la bielle (10) par l'intermédiaire d'une goulotte coulissante.

2. Lit multifonction selon la revendication 1, dans lequel l'ensemble de verrouillage comprend un second pignon (29) relié de manière fixe au plateau tournant (28) sur un côté ; le second pignon (29) est en liaison de serrage avec un siège à fente de pignon (30) ; une seconde tige fixe (31) pénètre à travers le siège à fente de pignon (30), le second pignon (29) et le plateau tournant (28) ; une extrémité de la seconde tige fixe (31) est reliée de manière fixe aux blocs coulissants (26) ; l'autre extrémité de la seconde tige fixe (31) est reliée de manière fixe à une coque de limitation (33) ; une paroi externe de la seconde tige fixe (31) est manchonnée d'un ressort de pression (32) ; une extrémité du ressort de pression (32) est reliée de manière fixe à un côté du siège à fente de pignon (30) ; l'autre extrémité du ressort de pression (32) est reliée de manière fixe à une paroi interne d'un côté de la coque de limitation (33) ; deux tiges déflectrices (35) sont montées de manière fixe sur une paroi externe circonférentielle du siège à fente de pignon (30) ; deux trous de coulissement de limitation (34) sont formés dans une paroi externe circonférentielle de la coque de limitation (33) ; et les deux tiges déflectrices (35) sont reliées de manière coulissante aux deux trous de coulissement de limitation (34) respectivement.

3. Lit multifonction selon la revendication 1, dans lequel une tige télescopique électrique (11) est intégrée de manière fixe à la partie supérieure du corps de lit (1) ; un arbre de sortie de la tige télescopique électrique (11) est pourvu de manière fixe d'une plaque de poussée (12) ; la plaque de poussée (12) s'appuie contre une partie inférieure du matelas (4) ; un bloc de limitation (13) est monté de manière fixe à la partie inférieure du matelas (4) ; et la plaque de poussée (12) coopère avec le bloc de limitation (13).

4. Lit multifonction selon la revendication 1, dans lequel un module de réchauffage (14) est intégré de manière fixe dans une partie supérieure du matelas (4) ; et une plaque de conduction thermique en graphène (15) est montée de manière fixe à une partie supérieure du module de réchauffage (14).

5. Lit multifonction selon la revendication 1, dans lequel une carte de circuits imprimés (16) est montée de manière fixe à la partie inférieure du corps de lit (1) ; et la carte de circuits imprimés (16) est connectée électriquement à la tige télescopique électrique (11), au moteur (19) et au module de réchauffage (14).

6. Lit multifonction selon la revendication 1, dans lequel une rainure destinée à accueillir la plaque de poussée (12) et le bloc de limitation (13) est formée dans une paroi interne inférieure de la cavité (3).

7. Lit multifonction selon la revendication 1, dans lequel la première roue de synchronisation (21) et la pluralité de premiers pignons (18) sont séparément situés dans des compartiments rigides sur les deux côtés du cadre de montage rigide (5).
